# EUROPÄISCHE PATENTANMELDUNG

(11) **EP 0 890 300 A1**
(43) Veröffentlichungstag der Anmeldung: **13.01.1999**
(21) Anmeldenummer: 98112564.4
(22) Anmeldetag: 07.07.1998
(51) Int. Cl.: A01C 23/02, A01C 23/00

(54) **Vorrichtung für Güllevorratsbehälter**

(30) Priorität: 08.07.1997 DE 29712003 U
(71) Anmelder: Fliegl, Josef, 84556 Kastl (DE)
(72) Erfinder: Fliegl, Josef, 84556 Kastl (DE)
(74) Vertreter: Seidel, Herta, Dipl.-Phys.

(57) **Zusammenfassung**

Anbauvorrichtung für Güllevorratsbehälter, umfassend mindestens ein Gülleverteilerrohr, dem die Gülle aus dem Güllevorratsbehälter zugeführt wird, mit in Abständen längs des Verteilerrohres angeordneten Auslaufstutzen, auf die Schläuche aufgeschoben sind, deren Enden im Arbeitseinsatz bis zur Ackerfläche reichen, wobei in Fahrtrichtung gesehen, vor den Schlauchenden (11a) eine im Arbeitseinsatz die oberste Bodenschicht der Ackerfläche abhebende Schürfeinrichtung (14,28) angeord- net ist, und/oder wobei jedem Schlauchende eine Eggenzinke (23) zurgeordnet ist, die in Fahrtrichtung gesehen, hinter und seitlich benachbart zu dem Schlauchende angeordnet ist und im Arbeitseinsatz mit ihrem Ende in das Erdreich des zu bearbeitenden Ackers (13) eingreift und über die Bahn des Gülleflusses schiebt.

## Beschreibung

Die Erfindung betrifft eine Anbauvorrichtung für Güllevorratsbehälter, umfassend mindestens ein Gülleverteilerrohr, dem die Gülle aus dem Güllevorratsbehälter zugeführt wird, mit in Abständen längs des Verteilerrohres angeordneten Auslaufstutzen, auf die Schläuche aufgeschoben sind, deren Enden im Arbeitseinsatz bis zur Ackerfläche reichen.

Gülleverteiler der gattungsgemäßen Art haben den Vorteil, daß im Unterschied zu den herkömmlichen Gülleverteilern nach dem Sprühtellerprinzip die Gülle in unmittelbarer Nähe der Ackeroberfläche ausgebracht wird. Hierdurch wird bereits ein beträchtlicher Teil der sonst vorhandenen Geruchsbelästigung vermieden und außerdem werden die in die Atmoshäre austretenden Schadstoffe verringert. Es ist jedoch jedem Landwirt bekannt, daß insbesondere bei trockenen Bodenoberflächen die ausgebrachte Gülle nicht mit aureichender Geschwindigkeit in das Erdreich eindringen kann, um nicht doch eine große Geruchsbelästigung zu verursachen.

Der vorliegenden Erfindung liegt nun die Aufgabe zugrunde, eine Vorrichtung zu schaffen, die es ermöglicht, alle Geruchsbelästigungen zu verhindern, mit dem Vorteil, daß unabhängig von der herrschenden Witterung die Gülle ausgebracht werden kann, ohne daß die Umgebung unter Geruchsbelästigung leiden müßte.

Dies wird erfindungsgemäß dadurch erreicht, daß entsprechend dem kennzeichnenden Teil des Hauptanspruches, in Fahrtrichtung gesehen, vor den Schlauchenden eine im Arbeitseinsatz die oberste Bodenschicht der Ackerfläche abhebende Schürfeinrichtung angeordnet ist, und/oder daß jedem Schlauchende eine Eggenzinke zugeordnet ist, die in Fahrtrichtung gesehen, hinter und seitlich benachbart zu dem Schlauchende angeordnet ist und im Arbeitseinsatz mit ihrem Ende in das Erdreich des zu bearbeitenden Ackers eingreift und über die Bahn des Gülleflusses verschiebt.

Da die ausströmende Gülle erfahrungsgemäß nicht sofort in den Ackerboden eindringt, soll nach der Erfindung, in Fahrtrichtung gesehen, vor den Schläuchen eine Schürfeinrichtung vorgesehen sein. Diese hat die Aufgabe und Möglichkeit, im Arbeitseinsatz des Gülleverteilers die oberste Bodenschicht des Ackers abzuheben, also die fest gewordene Oberschicht des Ackers zu lockern, wobei während der Vorwärtsbewegung des Güllewagens der von der Schürfeinrichtung abgehobene Humus über die Schürfeinrichtung hinweggleitet. Infolge der Lockerung der Bodenkrume kann die ausfließende Gülle leichter in den Boden eindringen. Das durch die Schürfleiste hochgewirbelte Erdreich fällt herab und deckt die Güllebahn unmittelbar nach dem Ausfließen der Gülle aus den Schlauchenden ab. Hierdurch wird weitgehend unterbunden, daß Gülletröpfchen und die vom Ackerboden ausgehenden Gerüche und Schadstoffe in die Atmosphäre gelangen.

Ein entsprechendes Ergebnis läßt sich aber nach der Erfindung auch dadurch erzielen, wenn alternativ zu der vorstehend genannten Schürfleiste jedem Schlauchende eine Eggenzinke zugeordnet wird, die hinter und seitlich benachbart zu dem Schlauchende angeordnet ist. Infolge der erfindinngsgemäßen Maßnahme wird erreicht, daß nach dem Ausfließen der Gülle aus den Schläuchen durch die unmittelbar nachfolgende Eggenzinke das seitlich von der Güllebahn befindliche Erdreich durch die Eggenzinke über die Güllebahn geworfen und diese dabei weitgehend abgedeckt wird.

Bisher war man gezwungen, um ein solches Abdecken der ausgebrachten Gülle zu erhalten, die herkömmlichen Eggen hinter den Gülleverteilerwagen nachzuziehen. Ein solches Vorgehen erforderte aber einen ho hen Energieverbrauch und ließ keine Möglichkeit offen, für eine individuelle Steuerung der Eindringtiefe der einzelnen Eggenzinken.

Durch die erfindungsgemäße Zuordnung je einer Eggenzinke zu je einem Schlauchende ist es möglich, die Gesamtanzahl der Eggenzinken auf die Anzahl der jeweils vorhandenen Schläuche zu beschränken, damit wird aber das Gesamtgewicht der Eggenzinken gegenüber einer herkömmlichen Egge maßgeblich verringert. Darüber hinaus ist aber durch die Zuordnung von Eggenzinken zu Schlauchenden innerhalb der erfindinngsgemäßen Anbauvorrichtung die Möglichkeit geschaffen, die Eindringtiefe der einzelnen Eggenzinken durch entsprechende Höhenverstellung der Anbauvorrichtung bzw. der Eggenzinken selbst zu wählen und damit gleichzeitig auch die erforderliche Zugkraft zu variieren, d.h. hier aber positiv zu beeinflussen.

Beide vorstehend beschriebene Maßnahmen bringen bereits jeweils für sich gegenüber der bisherigen Arbeitsweise beim Ausbringen der Gülle große Vorteile. Ein optimales Abdecken der ausgebrachten Gülle wird aber durch Kombination beider Maßnahmen erreicht. Durch die Schürfleiste wird das Erdreich bereits vor dem Ausfließen der Gülle gelockert, sie kann daher besser in den Boden eindringen und wird sofort leicht abgedeckt durch die über die Schürfleiste geworfene Erdschicht. Durch die individuelle, mit jedem Gülleschlauch zusammenwirkende Eggenzinke erfolgt aber dann eine vollständige Einarbeitung der Gülleflüssigkeit in den Boden und damit eine vollständige Überdeckung der gesamten Güllebahn.

Gemäß einer vorzugsweisen Ausbildung der Erfindung ist jedem Schlauchende ein Gleitschuh zugeordnet. Dieser ist federnd mit dem Rahmengestell und über eine das Schlauchende umgebende Hülse mit dem Verteilerschlauchende verbunden. Während der Fahrt des Gülleverteilers über den Acker stabilisiert der Gleitschuh, der sich über die Ackerfläche gleitend den jeweiligen Bodenunregelmäßigkeiten anpaßt, die Lage der Schlauchenden so, daß die ausfließende Güllebahn exakt festgelegt bleibt und gewährleistet ist, daß die Bahn auch genau zwischen den nachfolgenden, benachbart angeordneten Eggenzinken verläuft und durch diese dann mit Erdreich abgedeckt werden kann. Ein unregelmäßiges Hin- und Herpendeln der Schlauchenden und damit ein unkontrolliertes seitliches Ausweichen der Schlauchenden ist ausgeschlossen, so daß die Funktion der Eggenzinken dem gewünschten Erfolg entspricht.

Einzelheiten der Erfindung ergeben sich aus der nachstehenden Beschreibung eines Ausführungsbeispieles, bei dem die im Hauptanspruch alternativ aufgeführten Merkmale miteinander vereinigt sind. In der beigefügten Zeichnung zeigen
- Fig. 1: eine Gesamtansicht einer erfindungsgemäßen Anbauvorrichtung, die über einen Träger mit dem Güllevorratsbehälter verbindbar ist,

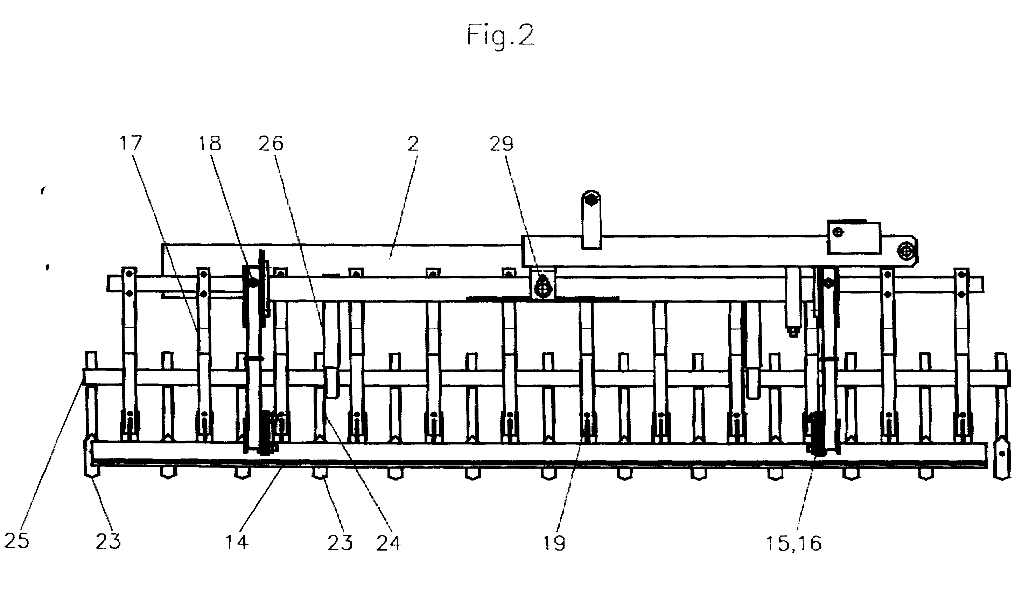

- Fig. 2: eine gegenüber der Fig. 1 vergrößerte Darstellung des linken Schwenkarmes des Gülleverteilers ohne die zu seiner Verschwenkung dienende Hydraulikeinrichtung,

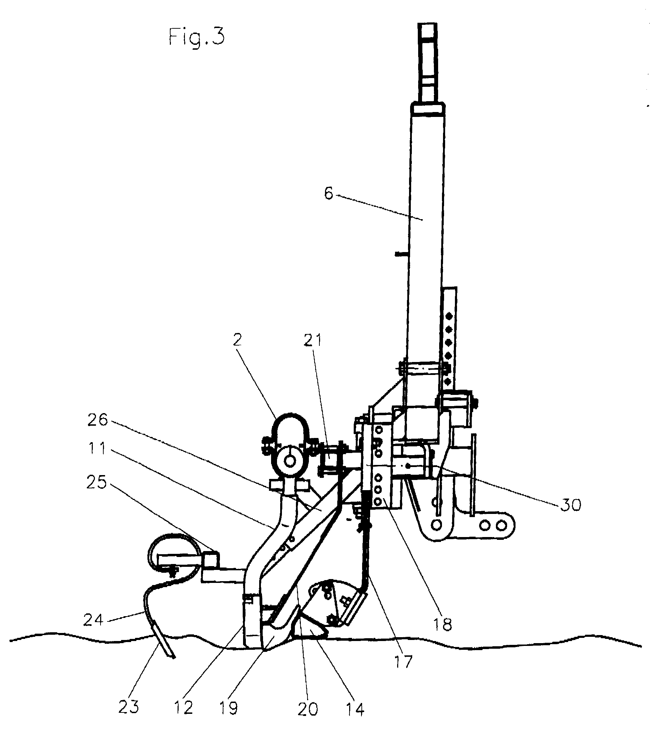

- Fig. 3: eine Schnittdarstellung längs der Linie 1...1 der Fig. 1,
- Fig. 4: eine gegenüber der Darstellung nach Fig. 3 vergrößerte Schnittdarstellung der Anbauvorrichtung mit Schürfleiste und
- Fig. 5: eine Darstellung der Anbauvorrichtung nach Fig. 4, jedoch mit einem die Schürfleiste ersetzenden Rohr .

Sich entsprechende Teile der verschiedenen Figuren sind mit übereinstimmenden Bezugszeichen gekennzeichnet.

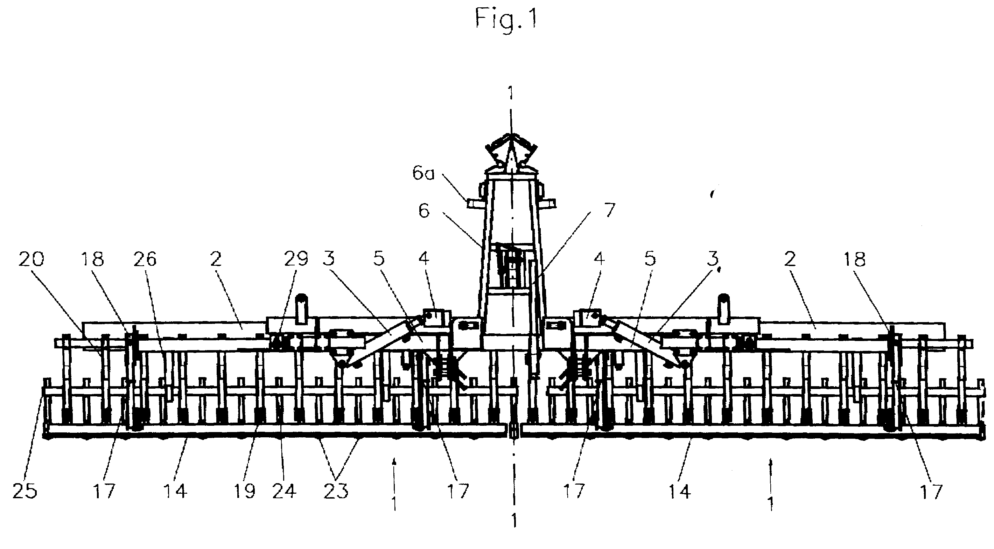

Wie in Fig. 1 gezeigt, ist bei dem hier dargestellten Ausführungsbeispiel je eine erfindungsgemäße Anbauvorrichtung 1 eines Gülleverteilers zusammen mit den Gülleverteilerrohren 2 mittels Hydraulikzylinder 3, die einerseits an einem Rahmen 4 und andererseits an einem Verbindungsrohr 5 der Anbauvorrichtung 1 schwenkbar befestigt sind, beidseitig eines Turmträgers 6 angebracht. Beim Verfahren des Güllevorratsbehälters, der hier nicht dargestellt ist, sind die Gülleverteilerrohre 2 zusammen mit der Anbauvorrichtung 1 nach oben geklappt und an den beiden Seiten des Turmträgers 6, der mit dem Güllevorratsbehälter verbunden ist, bei 6a arretiert.

Die in Fig. 1 gezeigte Stellung der Verteilerrohre 2 entspricht der Arbeitsstellung auf dem Feld. Die Hydraulikkolben 3 sind ausgefahren und die Verteilerrohre 2 zusammen mit der Anbauvorrichtung 1 bereits längs der Stange 7 nach unten verschoben worden. Die Höhenverstellung der Anbauvorrichtung 1 ist wählbar.

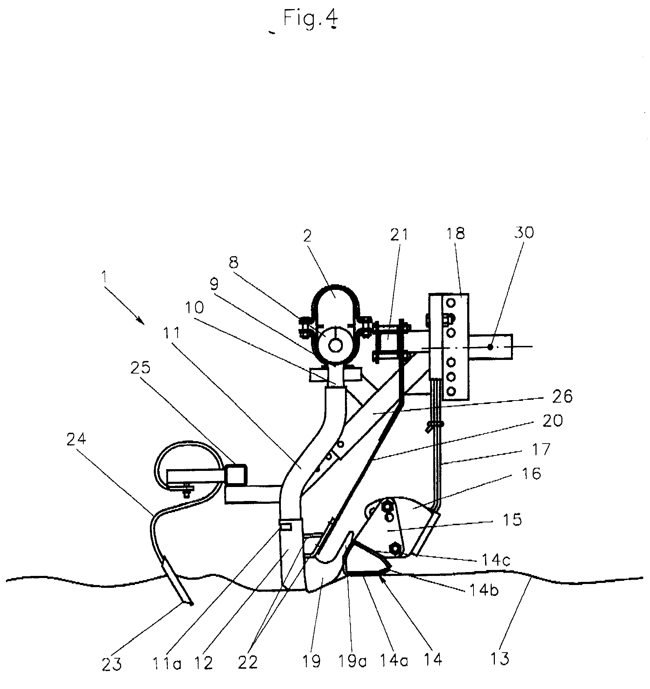

In Fig. 4 ist eine Ausführungsform der Anbauvorrichtung 1 zusammen mit dem Verteilerrohr 2 in Seitenansicht teils im Schnitt, getrennt von dem Rahmen 4 und dessen Verbindung mit dem Turmträger 6 dargestellt.

Das Gülleverteilerrohr 2 ist hier als ein Rohr von etwa ovalem Querschnitt ausgebildet, in dessen unterem Bereich sich eine Förderschnecke 8 befindet. In der unteren Rohrwandung des Verteilerohres 2 befinden sich in Abständen voneinander Auslaßöffnungen 9 mit Auslaßstutzen 10, auf die jeweils ein Schlauch 11 aufgesteckt ist, dessen Ende in Arbeitsstellung des Gülleverteilers bis zur Ackerfläche 13 reicht. Das Schlauchende 11a ist von einer Hülse 12 umgeben, die dem Schlauchende 11a eine gewisse Stabilität vermittelt, und das Schlauchende 11a stets in unmittelbarer Nähe der Oberfläche des Ackers hält. Hierzu ist die Hülse 12, wie aus Fig. 4 zu ersehen, mit einem Gleitschuh 19, der im Querschnitt die Form eines U-Profils hat, verbunden. Der Gleitschuh 19 ist über ßlattfedern 20 mit einem horizontalen Vierkantträgerrohr 21 der Anbauvorrichtung 1 verbunden. Während des Arbeitsvorganges gleitet der Gleitschuh 19 über das Feld und paßt sich infolge seiner gefederten Befestigung den Bodenunebenheiten an, hält dabei aber stets das Schlauchende 11a in Bahnrichtung und verhindert so ein seitliches Hin- und Herpendeln des Schlauchendes 11a.

Auf der zum Turmträger 6 hingerichteten Seite der Anbauvorrichtung 1 ist eine Schürfleiste 14 vorgesehen. Die Länge der Schürfleiste 14 überragt zum äußeren Ende hin die Länge des Verteilerrohres 2. Der Querschnitt der Schürfleiste 14 hat, wie aus Fig. 4 erkennbar, etwa die Form eines rechtwinkligen Dreieckes. Die Ausrichtung der der einen Kathede 14a zugehörigen Fläche erfolgt durch Verschwenkung und Verschraubung ihres Halteflügels 15 an einer Trägerplatte 16 derart, daß die Schürfleistenfläche 14a etwa auf der Ackerfläche 13 aufliegt, bzw. geringfügig in diese eindringt. Hierzu ist der der Fläche 14a anliegende spitze Winkel als spitze Doppelecke 14b ausgebildet. Die Trägerplatte 16 ist über zwei Blattfedern 17 höhenverstellbar mit einem Rahmen 18 verbunden. Hierdurch ist gewährleistet, daß beim Überfahren eines Feldes die Schürfleiste 15 federnd über die Ackerfläche gleitet und mittels ihrer spitzwinkligen Vorderkante 14b geringfügig in das Erdreich eindringt und eine kleine Schicht des Bodens anhebt, die dann durch die Vorwärtsbewegung des Gülleverteilers über die Hypotenusenfläche 14c der Schürfleiste 14 hinweg in Richtung zum Schlauchende 11a gleitet und über die ausgeflossene Gülle auf den Ackerboden zurückfällt und den Güllestrom überdeckt.

Der eine Schenkel 19a des U-Profils 19 ist so lang ausgebildet, daß er die Höhe der benachbart angeordneten Schürfleiste 14 überragt. Dies hat den Grund darin, daß er sich bei seinen Auf- und Abbewegungen, die durch die Unebenheiten des Ackerbodens bedingt sind, nicht in der Schürfleiste verhaken kann.

Um sicherzustellen, daß die auf das Feld aufgebrachte Gülle aber vollständig vom Erdreich abgedeckt wird, so daß keinerlei Geruchsbelästigung nach Beendigung des Arbeitsablaufes mehr befürchtet werden muß, ist bei dem hier dargestellten Ausführungsbeispiel in Fahrtrichtung gesehen, hinter den Schlauchenden 11a und zwar jeweils zwischen zwei benachbarten Schlauchenden 11a eine Eggenzinke 23 vorgesehen. Jede Eggenzinke 23 ist über eine Blattfeder 24 an einem Vierkantrohr 25 befestigt, wobei das Vierkantrohr 25 seinerseits wieder höhenverstellbar in einem Träger 26 verschraubt ist, der schwenkbar an einem Rahmen gehalten ist. Hierdurch wird erreicht, daß die Eindringtiefe der Eggenzinken 23 in das Erdreich 13 jeweils individuell bestimmt werden kann. Dabei reicht bei dieser Konstruktion bereits eine geringe Eindringtiefe der Eggenzinken aus, um das gewünschte Ergebnis zu erhalten. Dies bedeutet aber gegenüber dem Einsatz herkömmlicher Eggen, die von den Güllebehältern über das Feld gezogen werden, eine große Energieersparnis.

Während der Fahrt des Güllevorratsbehälters über den Acker wird mittels der sich seitlich der Bahnen des Gülleflusses in das Erdreich eingrabenden Eggenzinken 23 das Erdreich über die beidseitig der Eggenzinken 23 verlaufenden Güllebahnen geworfen, so daß diese während der Fahrt des Güllebehälters bereits vollständig abgedeckt werden und keine Schadstoffe in die Atmosphäre gelangen können. Auch die Geruchsbelästigung ist bei dieser Art der Gülleausbreitung vollständig beseitigt, da kein Güllestrom mehr frei durch die Luft fließt, bevor er mit dem Erdreich in Kontakt kommt.

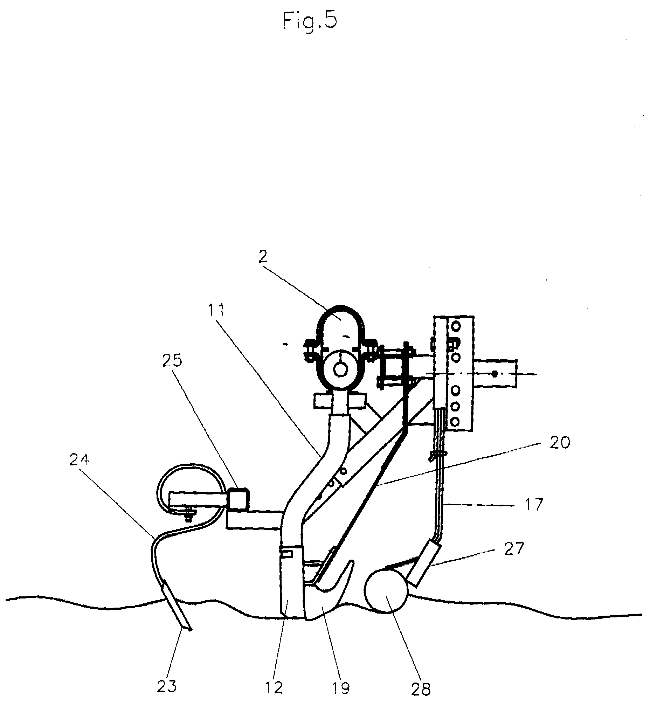

Wie aus Fig. 5 ersichtlich, ist hier anstelle der in Form einer Kufe ausgebildeten Schürfleiste 14 ein Rohr 28 vorgesehen, das über Halteorgane 27 mit der Blattfeder 17 verbunden ist. Es ist aber auch denkbar, andere Umrißformen als Schürfleiste einzusetzen, sofern die gewünschte Funktion, nämlich ein Abheben der Erdschicht und deren Transport über die Oberfläche der Schürfleiste nach hinten erzielt wird. Auch hier wird eine dünne Erdschicht über die Rohroberfläche nach hinten transportiert, um wieder über die in das Erdreich eindringende Gülle geworfen zu werden.

Es soll abschließend noch darauf hingewiesen werden, daß die Verbindungen und Befestigungen der vorstehend beschriebenen Teile der erfindinngsgemäßen Anbauvorrichtung 1 nicht nur ihrerseits über Federvorrichtungen 17,20,24, und längenverstellbare Trägereinrichtungen 18,26 erfolgen, um die Unebenheiten des Ackerbodens beim Überfahren auszugleichen, sondern daß auch die Trägereinrichtungen 18,26 selbst ihrerseits wieder um horizontale Schwenkachsen 29,30 verschwenkbar sind, um die Neigung des überfahrenen Geländes kompensieren zu können und einen gleichmäßigen Gülleaustrag zu erreichen.

## Patentansprüche

1. Anbauvorrichtung für Güllevorratsbehälter, umfassend mindestens ein Gülleverteilerrohr, dem die Gülle aus dem Güllevorratsbehälter zugeführt wird, mit in Abständen längs des Verteilerrohres angeordneten Auslaufstutzen, auf die Schläuche aufgeschoben sind, deren Enden im Arbeitseinsatz bis zur Ackerfläche reichen, **dadurch gekennzeichnet,** daß in Fahrtrichtung gesehen, vor den Schlauchenden (11a) eine im Arbeitseinsatz die oberste Bodenschicht der Ackerfläche abhebende Schürfeinrichtung (14,28) angeordnet ist, und/oder daß jedem Schlauchende eine Eggenzinke (23) zu geordnet ist, die in Fahrtrichtung gesehen, hinter und seitlich benachbart zu dem Schlauchende angeordnet ist und im Arbeitseinsatz mit ihrem Ende in das Erdreich des zu bearbeitenden Ackers (13) eingreift und über die Bahn des Gülleflusses schiebt.

2. Vorrichtung nach Anspruch 1, **dadurch gekennzeichnet,** daß die Schürfeinrichtung in Form einer Schürfleiste (14) ausgebildet ist, die etwa die Länge des Verteilerrohres (2) hat.

3. Vorrichtung nach Anspruch 1 oder 2, **dadurch gekennzeichnet,** daß die Querschnittsform der Schürfleiste (14) etwa einem rechtwinkligen Dreieck entspricht, wobei die eine Kathedenfläche (14a) im Arbeitseinsatz etwa parallel zum Ackerboden (13) verläuft.

4. Vorrichtung nach einem der vorhergehenden Ansprüche, **dadurch gekennzeichnet,** daß die Schürfeinrichtung (14,28) über Federn (17) an einem Rahmengestell (18) befestigt ist.

5. Vorrichtung nach einem der vorhergehenden Ansprüche, **dadurch gekennzeichnet,** daß die Schürfeinrichtung (14,28) höhenverstellbar am Rahmengestell (18) befestigt ist.

6. Vorrichtung nach einem der vorhergehenden Ansprüche, **dadurch gekennzeichnet,** daß die Schürfeinrichtung in Form eines Rohrs (28) ausgebildet ist.

7. Vorrichtung nach einem der vorhergehenden Ansprüche, **dadurch gekennzeichnet,** daß die Eggenzinken (23) über eine Feder (24) in Abständen, die etwa den Abständen der Schläuche an dem Verteilerrohr entsprechen, an einem längs des Verteilerrohres verlaufenden Träger (25) angeordnet sind.

8. Vorrichtung nach einem der vorhergehenden Ansprüche, **dadurch gekennzeichnet,** daß die Eindringtiefe der Eggenzinken (23) in das Erdreich durch Höhenverstellung ihres Trägers (25) wählbar ist.

9. Vorrichtung nach einem der vorhergehenden Ansprüche, **dadurch gekennzeichnet,** daß der Träger (25) der Eggenzinken (23) schwenkbar am Rahmen (18) angeordnet ist.

10. Vorrichtung nach einem der vorhergehenden Ansprüche, **dadurch gekennzeichnet,** daß jedem Schlauchende (11a) ein Gleitschuh (19) zugeordnet ist, der einerseits über Federn (20) mit einem längs des Verteilerrohres (2) verlaufenden Rahmengestell (21) und andererseits mit dem Schlauchende verbunden ist und der im Arbeitseinsatz über die Ackerfläche (13) entlanggleitet.

11. Vorrichtung nach einem der vorhergehenden Ansprüche, **dadurch gekennzeichnet,** daß der Gleitschuh (19) mit dem Schlauchende (11a) über eine Hülse (12) verbunden ist, die das Schlauchende (11a) umgibt.

12. Vorrichtung nach einem der vorhergehenden Ansprüche, **dadurch gekennzeichnet,** daß die Gleitschuhe (19) zwischen der Schürfleiste (14) und den Verteilerschläuchen (11) angeordnet sind.

13. Vorrichtung nach einem der vorhergehenden Ansprüche, **dadurch gekennzeichnet,** daß der Gleitschuh (19) die Form eines U-Profils aufweist.

14. Vorrichtung nach einem der vorhergehenden Ansprüche, **dadurch gekennzeichnet,** daß das U-Profil des Gleitschuths (19) mit seinem einen Schenkel unmittelbar an der Hülse (12) des Schlauchendes (11a) anliegt.

15. Vorrichtung nach einem der vorhergehenden Ansprüche, **dadurch gekennzeichnet,** daß die Länge des freien Schenkels (19a) des U-Profils (19) so gewählt ist, daß sie die Höhe der Schürfeinrichtung (14,28) übersteigt.
